# EUROPÄISCHE PATENTANMELDUNG

(11) **EP 4 480 613 A1**
(43) Veröffentlichungstag der Anmeldung: **25.12.2024**
(21) Anmeldenummer: 23181168.8
(22) Anmeldetag: 23.06.2023
(51) Int. Cl.: B23D 59/00, B28D 7/02

(54) **ELEKTRISCHE BEARBEITUNGSVORRICHTUNG**

(71) Anmelder: Mafell AG, 78727 Oberndorf a.N. (DE)
(72) Erfinder: HÄHNLE, Oliver, 72461 Albstadt (DE); FALLER, Matthias, 78120 Furtwangen (DE); SCHMID, Harald, 78576 Emmingen (DE); HIRNEISE, Johannes, 71131 Jettingen (DE)
(74) Vertreter: Manitz Finsterwald Patent- und Rechtsanwaltspartnerschaft mbB

(57) **Zusammenfassung**

Die Erfindung betrifft eine elektrische Bearbeitungsvorrichtung zum Bearbeiten von Werkstücken, mit einem während der Bearbeitung eine Auflage für ein jeweiliges Werkstück bereitstellenden Arbeitstisch (11), einer ein Bearbeitungswerkzeug(13), insbesondere ein Sägeblatt (13) oder eine Trennscheibe (13), umfassenden Arbeitseinheit (15), und einer Absaugeinrichtung für während der Bearbeitung entstehendes Staub und/oder Partikelmaterial, wobei der Arbeitstisch (11) einen sich in einer Arbeitsrichtung erstreckenden Arbeitsschlitz (17) aufweist, in den das Bearbeitungswerkzeug (13) während der Bearbeitung von oben eintaucht, wobei die Absaugeinrichtung eine Saugdüse (19) umfasst, die von unten in den Arbeitsschlitz (17) hineinragt und eine in Arbeitsrichtung langgestreckte, nach oben weisende Saugöffnung (21) aufweist, und wobei die Saugdüse (19) derart weit in den Arbeitsschlitz (17) hineinragt, dass während der Bearbeitung das in den Arbeitsschlitz (17) eingetauchte Bearbeitungswerkzeug (13) durch die Saugöffnung (21) hindurch in die Saugdüse (19) hinein vorsteht.

## Beschreibung

Die Erfindung betrifft eine elektrische Bearbeitungsvorrichtung, insbesondere eine Säge- oder Trennvorrichtung, insbesondere eine Trockensteinsäge, zum Bearbeiten von Werkstücken, insbesondere zum Sägen oder Trennen von Werkstücken aus Steinmaterial, mit einem während der Bearbeitung eine Auflage für ein jeweiliges Werkstück bereitstellenden Arbeitstisch, mit einer ein Bearbeitungswerkzeug, insbesondere ein Sägeblatt oder eine Trennscheibe, umfassenden Arbeitseinheit, und mit einer Absaugeinrichtung für während der Bearbeitung entstehendes Staub- und/oder Partikelmaterial.

Derartige Bearbeitungsvorrichtungen sind grundsätzlich bekannt. Der bei der Bearbeitung insbesondere von Steinmaterial entstehende Staub kann nicht nur den Arbeitsplatz verschmutzen, sondern auch gesundheitsgefährdend sein. Es sind Nasssägen bekannt, die allerdings beträchtliche Wassermengen und eine Entsorgung des entstehenden Schmutzschlammes erfordern. Eine Absaugeinrichtung kann eine Trockenbearbeitung ermöglichen, erfordert aber in der Praxis einen beträchtlichen Aufwand, insbesondere hinsichtlich der Saugleistung, um eine ausreichende Staubfreiheit gewährleisten zu können.

Aufgabe der Erfindung ist es, eine Bearbeitungsvorrichtung der eingangs genannten Art zu schaffen, die gewährleisten kann, dass ein möglichst großer Anteil des während der Bearbeitung entstehenden Staub- und/oder Partikelmaterials nicht in die Umgebung gelangt.

Die Lösung dieser Aufgabe erfolgt durch die Merkmale des Anspruchs 1. Erfindungsgemäß ist vorgesehen, dass der Arbeitstisch einen sich in einer Arbeitsrichtung erstreckenden Arbeitsschlitz aufweist, in den das Bearbeitungswerkzeug während der Bearbeitung von oben eintaucht, dass die Absaugeinrichtung eine Saugdüse umfasst, die von unten in den Arbeitsschlitz hineinragt und eine in Arbeitsrichtung langgestreckte, nach oben weisende Saugöffnung aufweist, und dass die Saugdüse derart weit in den Arbeitsschlitz hineinragt, dass während der Bearbeitung das in den Arbeitsschlitz eingetauchte Bearbeitungswerkzeug durch die Saugöffnung hindurch in die Saugdüse hinein vorsteht.

Es hat sich gezeigt, dass mit einer derartigen Anordnung von Saugdüse und Bearbeitungswerkzeug bei relativ geringer Leistung der Absaugeinrichtung ein vergleichsweise großer Anteil des Materials zuverlässig daran gehindert werden kann, in die Umgebung zu gelangen. Die Leistung herkömmlicher mobiler Industriestaubsauger kann bei dieser Anordnung für eine wirksame Absaugung ausreichen.

Die Arbeitsrichtung, in welcher sich der im Arbeitstisch ausgebildete Arbeitsschlitz erstreckt, ist diejenige Richtung, entlang welcher sich während der Bearbeitung das Bearbeitungswerkzeug und das Werkstück relativ zueinander bewegen. Wenn das Bearbeitungswerkzeug ein Sägeblatt oder eine Trennscheibe ist, dann liegt der Arbeitsschlitz folglich in einer Ebene, die durch das Sägeblatt bzw. die Trennscheibe definiert ist.

Mögliche Ausführungsformen der Erfindung sind auch in den abhängigen Ansprüchen, der nachfolgenden Beschreibung sowie der Zeichnung angegeben.

Gemäß einigen Ausführungsformen kann die Saugdüse derart weit in den Arbeitsschlitz hineinragen, dass die Saugöffnung der Saugdüse im Bereich einer durch den Arbeitstisch definierten Auflageebene liegt. Die Saugöffnung kann genau in der Auflageebene liegen, d. h. die Saugdüse kann bündig mit der Auflageebene abschließen. Alternativ kann die Saugdüse bis unmittelbar an die Auflageebene heranreichen. Insbesondere kann der Abstand der Saugöffnung von der Auflageebene im Bereich von 1/10 bis 1/50 der im Bereich der Saugdüse gemessenen Höhe des Arbeitsschlitzes, also der Arbeitstischdicke, liegen. Der Abstand kann insbesondere der Dicke einer die Auflageebene definierenden Tischauflage entsprechen, beispielsweise einer Gummimatte.

Bei einigen Ausführungsbeispielen kann vorgesehen sein, dass die Eintauchtiefe des Bearbeitungswerkzeugs in den Arbeitsschlitz kleiner ist als die im Bereich der Saugdüse gemessene Höhe des Arbeitsschlitzes. Das Bearbeitungswerkzeug erstreckt sich also nicht bis unterhalb des Arbeitstisches, steht also nicht nach unten vor.

Gemäß einigen Ausführungsformen kann vorgesehen sein, dass das Bearbeitungswerkzeug kreisscheibenförmig ist und das Verhältnis der Länge der Saugöffnung zu dem Durchmesser des Bearbeitungswerkzeugs im Bereich von 0,5 bis 1,5 liegt. Vorzugsweise ist die Länge der Saugöffnung kleiner als der Durchmesser des Bearbeitungswerkzeugs.

Bei einigen Ausführungsbeispielen können das Bearbeitungswerkzeug und die Saugdüse während der Bearbeitung relativ zueinander feststehend angeordnet sein. Es versteht sich, dass hiervon eine bestimmungsgemäße Arbeitsbewegung des Bearbeitungswerkzeugs, also beispielsweise die während der Bearbeitung erfolgende Rotation eines Sägeblatts oder einer Trennscheibe, ausgenommen sind. Insbesondere in Arbeitsrichtung besteht zwischen Bearbeitungswerkzeug und Saugdüse also eine feste Relativposition, wodurch sichergestellt werden kann, dass während der Bearbeitung stets die gleichen geometrischen und somit Strömungsverhältnisse gegeben sind.

Gemäß einigen Ausführungsbeispielen kann vorgesehen sein, dass der Arbeitsschlitz frei von außerhalb der Saugdüse gelegenen, der Saugöffnung des Arbeitstisches vorgelagerten Einsätzen ist. Innerhalb des Arbeitsschlitzes befinden sich beispielsweise keine gitter- oder lamellenartigen Einsätze zur Beeinflussung der Saugwirkung der Saugdüse. Es versteht sich, dass das Fehlen von Einsätzen nicht ausschließt, dass gemäß einigen Ausführungsbeispielen der Arbeitsschlitz im Bereich zumindest eines Endes des Arbeitstisches lokal abgedeckt ist.

Die Saugdüse kann zumindest im Bereich ihrer Saugöffnung schmaler sein als der Arbeitsschlitz in diesem Bereich, wobei ein dadurch zumindest auf einer Seite der Saugdüse entstehender Spalt durch eine Abdeckung zumindest im Wesentlichen abgedeckt ist. Eine schmale Saugöffnung kann die Saugwirkung positiv beeinflussen, wobei die Abdeckung gewährleisten kann, dass der Spalt keinen negativen Einfluss auf die Saugwirkung hat.

Bevorzugt ist die Saugdüse derart im Arbeitsschlitz angeordnet, dass auf beiden Seiten der Saugdüse ein Spalt vorhanden ist, der jeweils durch eine Abdeckung zumindest im Wesentlichen abgedeckt ist. Insbesondere ist die Saugdüse bezogen auf eine Richtung quer zur Längserstreckung des Arbeitsschlitzes mittig in diesem angeordnet.

Die Abdeckung kann von einem separaten Bauteil gebildet sein. Insbesondere kann vorgesehen sein, dass das separate Bauteil zumindest teilweise in den Arbeitsschlitz eingelegt und/oder auf den Arbeitstisch aufgelegt und/oder von einer auf den Arbeitstisch aufgelegten, eine Auflagefläche für das Werkstück bereitstellenden Tischauflage gebildet ist. Die Tischauflage, die beispielsweise in Form einer Gummimatte vorgesehen sein kann, kann nach Art einer Dichtlippe beidseitig über die jeweilige seitliche Begrenzung des Arbeitsschlitzes vorstehen und so den dort vorhandenen Spalt abdecken.

Gemäß einigen Ausführungsbeispielen kann vorgesehen sein, dass die Saugdüse sich unterhalb des die Saugöffnung bildenden schmaleren Bereiches zumindest zu einer Seite hin erweitert, wobei der Übergang von dem schmaleren Bereich in den erweiterten Bereich als eine Schulter ausgebildet ist. Die Schulter kann eine Abstützfläche für die Abdeckung des Spaltes aufweisen. Insbesondere kann vorgesehen sein, dass die Abstützfläche zumindest im Wesentlichen parallel zur Auflage des Arbeitstisches verläuft. Vorzugsweise erweitert sich die Saugdüse zu beiden Seiten hin, d.h. die Saugdüse verbreitert sich.

Eine derartige seitliche Erweiterung oder Verbreiterung der Saugdüse ist aber nicht zwingend. Als Abstützung für eine Abdeckung des Spaltes kann beispielsweise der obere Rand der Saugdüse dienen. Die Saugdüse kann hierbei gegenüber der die Werkstückauflagefläche bereitstellenden Oberseite um einen Abstand zurückspringen, welcher der Dicke der Abdeckung entspricht.

In Arbeitsrichtung vor und/oder hinter dem Bearbeitungswerkzeug kann ein die Saugöffnung der Saugdüse lokal abdeckendes, insbesondere abnehmbares, Abdeckelement vorgesehen sein. Dabei kann das Abdeckelement an der Saugdüse angebracht sein. Eine Abdeckung der Saugöffnung kann die Saugleistung der Saugdüse weiter verbessern. Das Abdeckelement kann einen gabelförmigen Abschnitt mit einem von zwei seitlichen Zinkenabschnitten begrenzten Schlitz für das Bearbeitungswerkzeug aufweisen.

Gemäß einigen Ausführungsbeispielen kann vorgesehen sein, dass die Saugdüse bezüglich einer senkrecht zur Auflage des Arbeitstisches und parallel zur Arbeitsrichtung mittig durch den Arbeitsschlitz verlaufenden Ebene symmetrisch ausgebildet ist.

Bei einigen Ausführungsformen kann vorgesehen sein, dass die Saugdüse ein Bestandteil eines Saugsystems der Absaugeinrichtung ist, an das eine Unterdruckerzeugungseinrichtung angeschlossen oder anschließbar ist.

Die Unterdruckerzeugungseinrichtung kann von einem separaten, entnehmbaren Staubsauger gebildet sein. Der Staubsauger kann in die Bearbeitungsvorrichtung integriert sein. Alternativ kann die Bearbeitungsvorrichtung zumindest in einer Betriebskonfiguration einen Aufnahmeplatz für den Staubsauger aufweisen. Als Staubsauger kann beispielsweise ein herkömmlicher mobiler Industriestaubsauger dienen.

Das Saugsystem kann einen senkrecht zur Auflage des Arbeitstisches und parallel zur Arbeitsrichtung verlaufenden Saugkasten umfassen, dessen oberes Ende von der Saugdüse gebildet ist und der eine unterhalb des Arbeitstisches gelegene Materialauslassöffnung aufweist, wobei das Saugsystem in Strömungsrichtung zwischen der Saugöffnung der Saugdüse und der Materialauslassöffnung zumindest eine von dem Saugkasten seitlich wegführende Saugabzweigung aufweist. Vorzugsweise sind zwei zu gegenüberliegenden Seiten von dem Saugkasten wegführende Saugabzweigungen vorgesehen.

Material, das nicht über die Saugabzweigung abgesaugt wird, beispielsweise vergleichsweise schwere Partikel, können über die Materialauslassöffnung austreten. Insbesondere weist die Materialauslassöffnung nach unten. Der Saugkasten kann über die Materialauslassöffnung an einen, bevorzugt geschlossenen, Materialsammelbehälter angeschlossen oder mit der Materialauslassöffnung oberhalb eines oben offenen Materialsammelbehälters angeordnet sein. Auf diese Weise kann das Material direkt an der Bearbeitungsvorrichtung gesammelt werden.

Der Saugkasten kann schmal ausgeführt sein und eine im Vergleich zu seiner in Arbeitsrichtung verlaufenden Länge und zu seiner in vertikaler Richtung verlaufenden Höhe geringe Breite aufweisen. Insbesondere kann der Saugkasten schwert- oder finnenförmig sein.

Der Saugkasten kann derart geformt sein, dass das während der Bearbeitung entstehende, als Strahl von dem Bereich des Einwirkens des Bearbeitungswerkzeugs auf das Werkstück ausgehende Staub- und/oder Partikelmaterial direkt, d.h. ohne Aufprallen auf eine Wand des Saugkastens, durch die Materialauslassöffnung des Saugkastens hindurchtritt und insbesondere so direkt in einen sich anschließenden Materialsammelbehälter gelangt. Materialaufwirbelungen werden hierdurch minimiert. Der Abstrahlwinkel des Bearbeitungswerkzeugs, d.h. die Richtung des Materialstrahls, der sich gegebenenfalls aufweiten kann, also die Richtung eines entsprechende Winkelbereiches, sowie dessen Lage hängen von dem Bearbeitungswerkzeug, bei einem Sägeblatt insbesondere von dessen Durchmesser, sowie von der Höhe des Werkstücks ab. Der Saugkasten kann derart geformt sein, dass eine direkte Materialausbreitung für bei einer jeweiligen Vorrichtung in der Praxis vorkommende Kombinationen von in einem bestimmten Bereich liegenden Werkstückhöhen und für in einem bestimmten Bereich liegenden Größen des Bearbeitungswerkzeugs sichergestellt ist. Mit anderen Worten ist der Saugkasten dann mit einem bestimmten Bereich von Abstrahlwinkeln im Sinne einer direkten Ausbreitung kompatibel. Eine solche Formgebung kann z.B. durch eine Schwer- oder Finnenform - wie vorstehend erwähnt - erreicht werden.

Um ein Wiederaufsteigen von Material, insbesondere von Staub, zu verhindern oder zumindest zu reduzieren, können an einer oder mehreren Innenwänden des Saugkastens Rückhalteelemente z.B. in Form von Plättchen vorgesehen sein, die beispielsweise derart ausgebildet und angeordnet sind, dass deren insbesondere glatten Oberflächen jeweils nach unten geneigt sind, so dass der Strömungswiderstand von oben nach unten relativ gering und von unten nach oben relativ hoch ist. Derartige - sozusagen wie Widerhaken wirkende - Rückhalteelemente können z.B. an der vorderen und/oder der hinteren Schmalseite des Saugkastens von oben nach unten in einer oder mehreren Reihen aufeinanderfolgend angeordnet sein.

Am Übergang von dem Saugkasten in die Saugabzweigung kann der Strömungsquerschnitt die Form eines sich in Arbeitsrichtung erstreckenden Langlochs aufweisen.

Bei einigen Ausführungsbeispielen kann vorgesehen sein, dass der Saugkasten eine den Strömungsquerschnitt zwischen der Saugöffnung und der Saugabzweigung reduzierende Verengung aufweist.

Bei einigen Ausführungsformen kann eine jeweilige Saugabzweigung in einen unterhalb des Arbeitstisches angeordneten Materialabscheider des Saugsystems übergehen, der eine unterhalb des Arbeitstisches gelegene Materialauslassöffnung und stromaufwärts der Materialauslassöffnung eine zur Unterdruckerzeugungseinrichtung führende Saugabzweigung aufweist. Bei dem Materialabscheider kann es sich insbesondere um einen Zyklonabscheider handeln. Derartige Zyklonabscheider sind dem Fachmann grundsätzlich bekannt, sodass hierauf nicht näher eingegangen zu werden braucht. Bevorzugt sind zwei zu gegenüberliegenden Seiten von dem Saugkasten wegführende Saugabzweigungen vorgesehen, die jeweils in einen Materialabscheider übergehen. Vorzugsweise ist der Aufbau derart symmetrisch, dass sich der Saugkasten mittig zwischen zwei seitlich gelegenen Materialabscheidern, bevorzugt jeweils in Form eines Zyklonabscheiders, befindet.

Die Materialauslassöffnung des Materialabscheiders weist insbesondere nach unten. Über die Materialauslassöffnung kann der Materialabscheider an einen, bevorzugt geschlossenen, Materialsammelbehälter des Saugsystems angeschlossen oder mit der Materialauslassöffnung oberhalb eines oben offenen Materialsammelbehälter angeordnet sein. Insbesondere kann vorgesehen sein, dass für aus dem Saugkasten austretendes Material einerseits und für aus dem Materialabscheider austretendes Material andererseits ein gemeinsamer Materialsammelbehälter vorgesehen ist. Dieser Behälter kann ein gemeinsames Sammelfach oder getrennte Sammelfächer für den Saugkasten und den Materialabscheider aufweisen. Wenn zwei seitlich des Saugkastens angeordnete Materialabscheider vorgesehen sind, kann für diese jeweils ein eigenes Sammelfach vorgesehen sein.

Material, das in den Materialabscheider gelangt, aber nicht über dessen Saugabzweigung abgesaugt wird, kann auf diese Weise über die Auslassöffnung des Materialabscheiders austreten und direkt an der Bearbeitungsvorrichtung gesammelt werden.

Gemäß einigen Ausführungsbeispielen kann vorgesehen sein, dass der Saugkasten, der Materialabscheider und ein Materialsammelbehälter zu einer als Ganzes handhabbaren Saug-/Sammel-Einheit des Saugsystems gehören. Dabei kann vorgesehen sein, dass der Saugkasten und der Materialabscheider an einem Deckel des Materialsammelbehälters angebracht sind, der von einem Unterteil des Materialsammelbehälters abnehmbar oder relativ zu dem Unterteil des Materialsammelbehälters bewegbar, z.B. verschwenkbar, ist, um den Materialsammelbehälter entleeren zu können. Alternativ kann vorgesehen sein, dass der Deckel und/oder das Unterteil geöffnet werden kann, z.B. über eine Klappe, um den Behälter entleeren zu können, ohne dass z.B. der Deckel abgenommen werden muss.

Es kann vorgesehen sein, dass die Saug-/Sammel-Einheit in einer bezogen auf die Arbeitsrichtung hinteren Hälfte der Bearbeitungsvorrichtung unterhalb des Arbeitstisches angeordnet ist und sich die, insbesondere als separater, entnehmbarer Staubsauger ausgebildete, Unterdruckerzeugungseinrichtung in einer bezogen auf die Arbeitsrichtung vorderen Hälfte der Bearbeitungsvorrichtung unterhalb des Arbeitstisches befindet. Der an der Bearbeitungsvorrichtung zur Verfügung stehende Raum unterhalb des Arbeitstisches kann hierdurch optimal genutzt werden.

Gemäß weiteren Ausführungsbeispielen der Erfindung kann vorgesehen sein, dass die Saug-/Sammel-Einheit an einem oberen Arbeitsteil der Bearbeitungsvorrichtung angebracht und die Unterdruckerzeugungseinrichtung an einem unteren Gestellteil der Bearbeitungsvorrichtung angeordnet ist. Dabei kann vorgesehen sein, dass das obere Arbeitsteil bei von dem unteren Gestellteil entnommener Unterdruckerzeugungseinrichtung in vertikaler Richtung relativ zu dem unteren Gestellteil zwischen einer oberen Betriebskonfiguration und einer unteren Transportkonfiguration verstellbar ist. Das Verstellen kann z.B. über ein Scherengestänge zwischen Arbeitsteil und Gestellteil erfolgen, wobei das Scherengestänge federunterstützt sein kann, um die zum Bewegen des Arbeitsteils relativ zum Gestellteil von einem Benutzer aufzubringende Kraft zu reduzieren.

Wenn die Unterdruckerzeugungseinrichtung, beispielsweise ein separater Staubsauger, entnommen ist, kann die Bearbeitungsvorrichtung beispielsweise zusammengeklappt werden, indem das obere Arbeitsteil in Richtung des unteren Gestellteils verstellt wird. Die am oberen Arbeitsteil angebrachte Saug-/Sammel-Einheit kann geringere vertikale Abmessungen besitzen als die Unterdruckerzeugungseinrichtung, so dass die Saug-/Sammel-Einheit bei diesem Überführen in die Transportkonfiguration am oberen Arbeitsteil verbleiben kann. Beispielsweise ein die Unterdruckerzeugungseinrichtung bildender Staubsauger befindet sich folglich nur dann an seinem Platz an der Bearbeitungsvorrichtung, wenn er benötigt wird, nämlich dann, wenn sich die Bearbeitungsvorrichtung in der oberen Betriebskonfiguration befindet. Hierdurch kann erreicht werden, dass die Bearbeitungsvorrichtung in der Transportkonfiguration vergleichsweise wenig Platz benötigt.

Wie an anderer Stelle bereits erwähnt, kann als Unterdruckerzeugungseinrichtung ein herkömmlicher Staubsauger eingesetzt werden, wie er im Handwerk an Baustellen typischerweise vielfältig im Einsatz ist. Da ein derartiger Staubsauger auch für andere Arbeiten, die nicht mit der hier in Rede stehenden Bearbeitungsvorrichtung durchgeführt werden, eingesetzt werden kann, genügt es, wenn die Bearbeitungsvorrichtung in ihrer Betriebskonfiguration einen Platz für den Staubsauger zur Verfügung stellt. Es ist erfindungsgemäß zwar möglich, aber nicht notwendig, dass eine fest in die Bearbeitungsvorrichtung integrierte Unterdruckerzeugungseinrichtung wie beispielsweise ein fest integrierter Staubsauger vorgesehen ist.

Gemäß einigen Ausführungsbeispielen kann eine Haube, insbesondere eine Schutzhaube, für das Bearbeitungswerkzeug vorgesehen sein, wobei die Haube eine Austrittsöffnung für das Bearbeitungswerkzeug aufweist und ein an das Bearbeitungswerkzeug angrenzender freier Bereich der Austrittsöffnung zumindest teilweise durch eine oder mehrere Abdeckungen verschlossen ist.

Eine solche Haube kann einen oberen Abschnitt des Bearbeitungswerkzeugs umgeben, um einen versehentlichen Eingriff in das Bearbeitungswerkzeug von oben und von der Seite zu verhindern, und mit der Austrittsöffnung nach unten in Richtung des Arbeitstisches weisen. Indem die Austrittsöffnung dort, wo das Bearbeitungswerkzeug nicht austritt, zumindest teilweise verschlossen wird, kann verhindert werden, dass ein störender, insbesondere zu Staubaufwirbelungen führender Luftstrom, der während der Bearbeitung von dem sich bewegenden, insbesondere rotierenden, Bearbeitungswerkzeug erzeugt wird, nach unten aus der Haube austritt.

In Abhängigkeit davon, wie das Bearbeitungswerkzeug und die Haube relativ zueinander angeordnet sind und in Abhängigkeit von der Bewegung, insbesondere einer Rotationsrichtung, des Bearbeitungswerkzeug kann ein in Arbeitsrichtung vor dem Bearbeitungswerkzeug liegender freier Bereich und/oder ein in Arbeitsrichtung hinter dem Bearbeitungswerkzeug liegender freier Bereich durch eine oder mehrere Abdeckungen verschlossen sein. Insbesondere bei einem rotierenden Bearbeitungswerkzeug, wie z.B. einem Sägeblatt oder einer Trennscheibe, ist bevorzugt ein solcher freier Bereich durch eine oder mehrere Abdeckungen verschlossen, an dem das Bearbeitungswerkzeug, insbesondere ein z.B. mit einer Verzahnung versehener Umfangsbereich des Bearbeitungswerkzeugs, sich aus der Haube herausbewegt.

Gemäß weiteren Ausführungsbeispielen kann das Saugsystem eine Zusatzsaugdüse umfassen, deren Saugöffnung in der Flugbahn von während der Bearbeitung vom Bearbeitungswerkzeug weggeschleudertem Material liegt. Hierdurch kann erreicht werden, dass ein noch größerer Anteil des bei der Bearbeitung entstehenden Materials nicht in die Umgebung gelangt.

Wenn eine Haube für das Bearbeitungswerkzeug vorgesehen ist, dann kann die Zusatzsaugdüse an der Haube angebracht sein. Es ist dann nicht erforderlich, die Zusatzsaugdüse auf andere Art und Weise zu positionieren. Wenn das Bearbeitungswerkzeug und damit auch die Haube oder die das Bearbeitungswerkzeug samt Haube umfassende Arbeitseinheit an der Bearbeitungsvorrichtung verstellbar ist, hat das Anbringen der Zusatzsaugdüse an der Haube den weiteren Vorteil, dass die Zusatzsaugdüse stets optimal bezüglich des Bearbeitungswerkzeug angeordnet ist und nicht separat verstellt zu werden braucht.

Hierbei kann vorgesehen sein, dass die Zusatzsaugdüse an einen zur Unterdruckerzeugungseinrichtung führenden Saugkanal angeschlossen oder anschließbar ist. Der Saugkanal kann grundsätzlich beliebig ausgebildet sein. Es kann sich um einen wie auch immer geformten starren, insbesondere gehäuseartigen und/oder kanalförmigen Saugabschnitt handeln, über den die Zusatzsaugdüse strömungstechnisch mit der Unterdruckerzeugungseinrichtung verbunden ist. Alternativ kann der Saugkanal von einem oder mehreren flexiblen Saugschläuchen gebildet sein. Auch eine Kombination aus einem oder mehreren Saugschläuchen und einem oder mehreren starren Saugabschnitten ist möglich.

Grundsätzlich ist es möglich, die Haube als Absaughaube auszubilden. Dabei kann entweder die Haube separat an eine Unterdruckerzeugungseinrichtung angeschlossen oder anschließbar sein, wobei es alternativ auch möglich ist, den Unterdruck in der Haube über die Zusatzsaugdüse zu erzeugen, indem zwischen der Haube und der Zusatzsaugdüse eine Strömungsverbindung vorgesehen ist.

Gemäß einigen Ausführungsbeispielen kann vorgesehen sein, dass das Bearbeitungswerkzeug und die in den Arbeitsschlitz des Arbeitstisches hineinragende Saugdüse in Arbeitsrichtung feststehend angeordnet sind. Für die zur Bearbeitung eines Werkstücks erforderliche Relativbewegung zwischen Werkstück und Bearbeitungswerkzeug muss bei dieser Konfiguration der Bearbeitungsvorrichtung folglich das Werkstück zur Bearbeitung bewegt werden. Die Bearbeitungsvorrichtung kann so konfiguriert sein, dass diese Werkstückbewegung manuell von einem Benutzer auszuführen ist. Alternativ kann vorgesehen sein, dass eine Zufuhr von Werkstücken zum Bearbeitungswerkzeug mittels einer antriebsunterstützten Werkstückzufuhr erfolgt. Insbesondere kann die Zufuhr und Bearbeitung von Werkstücken automatisch erfolgen.

Gemäß einigen Ausführungsformen der Erfindung kann der Arbeitstisch in Arbeitsrichtung beweglich sein. Beispielsweise kann es sich um einen Rolltisch oder einen Gleittisch handeln, der auf einem entsprechend ausgebildeten Unterbau rollen bzw. gleiten kann.

Bei einem beweglichen Arbeitstisch kann vorgesehen sein, dass der Arbeitsschlitz durchgehend ist und den Arbeitstisch in zwei Teile teilt, die zur gemeinsamen Bewegung miteinander gekoppelt sind. Die Koppelung kann lösbar ausgebildet sein. Hierdurch ist es möglich, die beiden Teile des Arbeitstisches erforderlichenfalls separat zu handhaben, beispielsweise zu Reinigungs- oder Austauschzwecken oder zum Wechseln gegen einen anderen Typ von Arbeitstisch.

Zur Koppelung der beiden Teile des Arbeitstisches kann ein, bevorzugt separates, Koppelelement vorgesehen sein, das im Bereich des einen Endes des Arbeitstisches angeordnet ist. Das Koppelelement kann einen Fortsatz aufweisen, der den Arbeitsschlitz lokal abdeckt. Der Fortsatz kann gabelförmig sein, so dass beim Bewegen des Arbeitstisches in die entsprechende Endstellung insbesondere ein scheibenförmiges Bearbeitungswerkzeug, wie z.B. ein Sägeblatt oder eine Trennscheibe, zwischen die Gabelzinken gelangen kann, die folglich die Bereiche des Arbeitsschlitzes seitlich neben dem Bearbeitungswerkzeug zumindest teilweise verschließen.

Bei einem in Arbeitsrichtung beweglichen Arbeitstisch können die Werkstücke auf die vom Arbeitstisch bereitgestellte Auflage gelegt und relativ zum Bearbeitungswerkzeug dadurch bewegt werden, dass der Arbeitstisch bewegt wird. Hierbei kann der Arbeitstisch mit geeigneten Einrichtungen wie insbesondere Anschlagelementen für ein jeweiliges Werkstück versehen sein, die dafür sorgen, dass beim Bewegen des Arbeitstisches das Werkstück während der Bearbeitung jederzeit korrekt positioniert ist und insbesondere nicht verrutscht.

Alternativ kann der Arbeitstisch in Arbeitsrichtung feststehend angeordnet sein. Hierbei ist es zur Bearbeitung von Werkstücken erforderlich, diese beispielsweise manuell durch Schieben relativ zur Auflage des Arbeitstisches zu bewegen.

Hierbei kann vorgesehen sein, dass der Arbeitsschlitz des feststehenden Arbeitstisches geschlossen ist, was bedeutet, dass der Arbeitsschlitz nicht bis zu einer der Begrenzungsseiten des Arbeitstisches reicht. Insbesondere kann vorgesehen sein, dass sich der Arbeitsschlitz lediglich im Bereich der Saugöffnung der Saugdüse erstreckt. Hierdurch kann erreicht werden, dass alle an die Saugöffnung angrenzenden Bereiche von dem Arbeitstisch überdeckt sind. Es ist hierdurch möglich, auf zusätzliche Abdeckelemente zu verzichten.

Die Erfindung wird im Folgenden beispielhaft unter Bezugnahme auf die Zeichnung beschrieben. Es zeigen:

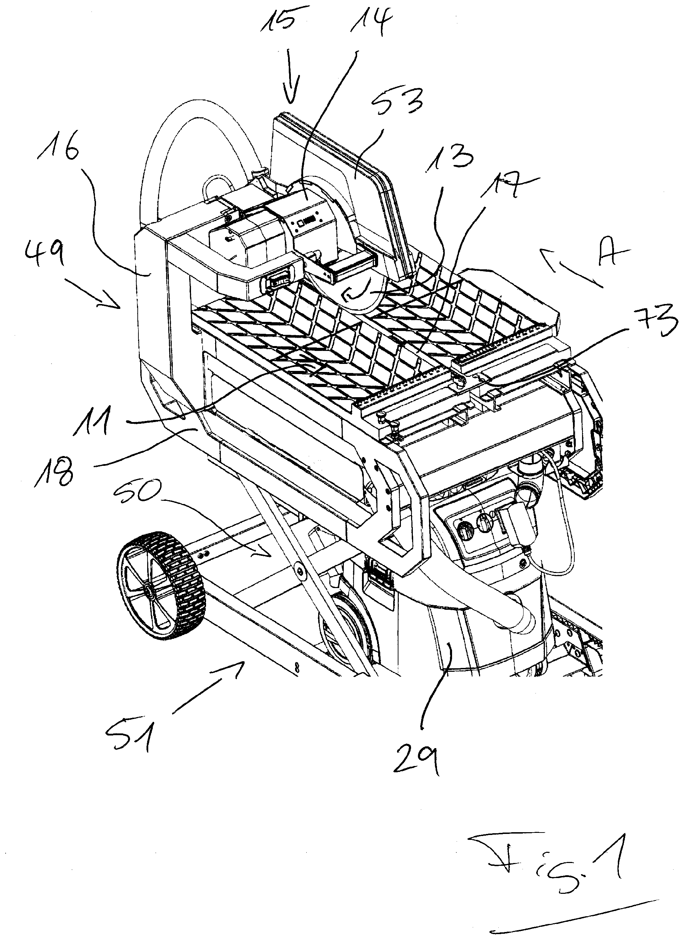

- Fig. 1 bis 11: verschiedene Ansichten eines Ausführungsbeispiels einer als Trockensteinsäge ausgebildeten elektrischen Bearbeitungsvorrichtung gemäß der Erfindung.

Wie insbesondere in den Fig. 1, 2 und 3 dargestellt ist, umfasst die Trockensteinsäge ein unteres Gestellteil 51 und ein oberes Arbeitsteil 49. Das Gestellteil 51 ist insofern nach Art einer Sackkarre ausgebildet, als im hinteren Bereich zwei Räder 65 und im vorderen Bereich zwei Handgriffe 67 angeordnet sind. In einer nicht dargestellten Transportkonfiguration kann die Säge somit auf einfache Weise von einer Person transportiert werden, ohne getragen werden zu müssen.

Das Gestellteil 51 und das Arbeitsteil 49 sind durch ein Hubwerk in Form eines Scherengestänges 50 miteinander verbunden. Dargestellt ist die Betriebskonfiguration der Säge, in der sich das Arbeitsteil 49 in einer oberen Arbeitsposition befindet und dabei über das Scherengestänge 50 am Gestellteil 51 abgestützt ist. Das Scherengestänge 50 ist federunterstützt, sodass sowohl beim Zusammenklappen als auch beim Auseinanderklappen, also beim Herunterdrücken als auch beim Hochziehen des Arbeitsteils 51, eine Bedienperson nur vergleichsweise wenig Kraft aufbringen muss.

In der dargestellten Betriebskonfiguration ist auf dem Gestellteil 51 unterhalb des Arbeitsteils 49 ein Stellplatz für einen separaten, mobilen Industriestaubsauger 29 vorhanden, der eine Unterdruckerzeugungseinrichtung im Sinne der vorliegenden Offenbarung und dabei Bestandteil einer Absaugeinrichtung der Steinsäge ist. Das Absaugkonzept der Steinsäge wird nachstehend näher erläutert.

Das Arbeitsteil 49 weist eine Arbeitseinheit 15 mit einem elektrischen Antriebsmotor 14 auf, die von einem vertikalen Tragarm 16 auskragt, der an einer Basis 18 des Arbeitsteils 49 angebracht ist. Der Motor 14 treibt während des Betriebs ein kreisscheibenförmiges Sägeblatt 13 an, das ein Bearbeitungswerkzeug im Sinne der vorliegenden Offenbarung ist und während des Betriebs in Pfeilrichtung rotiert. Ferner weist die Arbeitseinheit 15 eine Schutzhaube 53 für das Sägeblatt 13 auf, die einen oberen Abschnitt des Sägeblatts 13 von oben und seitlich abdeckt.

Bezogen auf eine Arbeitsrichtung A ist die Arbeitseinheit 15 und damit das Sägeblatt 13 feststehend angeordnet. Zum Sägen von Werkstücken, beispielsweise Steinplatten oder Fliesen, muss folglich ein jeweiliges Werkstück relativ zum Sägeblatt 13 in Arbeitsrichtung A bewegt werden.

Hierzu dient ein Arbeitstisch 11, der in dem dargestellten Ausführungsbeispiel zweigeteilt ist. Der Arbeitstisch 11 ist mit einem durchgehenden Arbeitsschlitz 17 versehen, der einen linken Teil des Arbeitstisches 11 von einem rechten Teil des Arbeitstisches 11 trennt. Durch ein lösbares Koppelelement 73, auf das an anderer Stelle näher eingegangen wird, sind die beiden Teile des Arbeitstisches 11 miteinander verbunden. Diese Verbindung kann werkzeuglos gelöst werden.

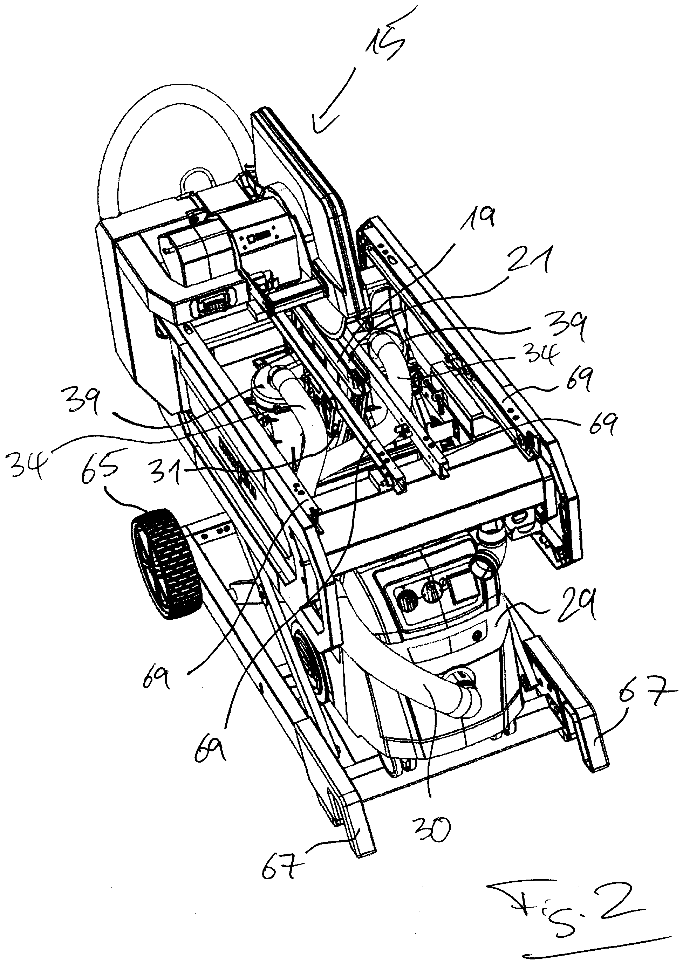

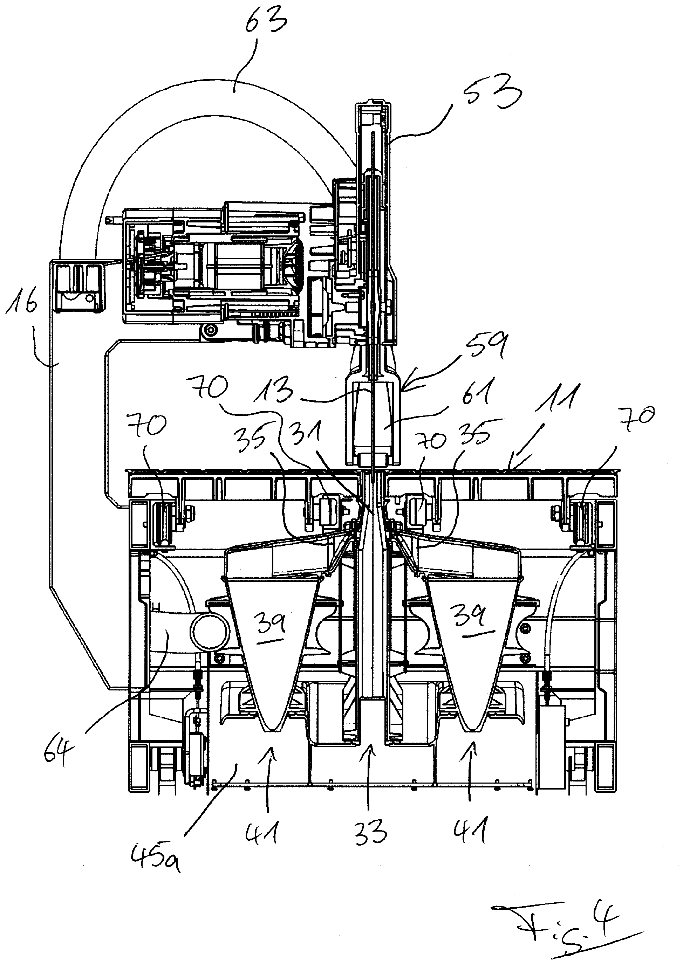

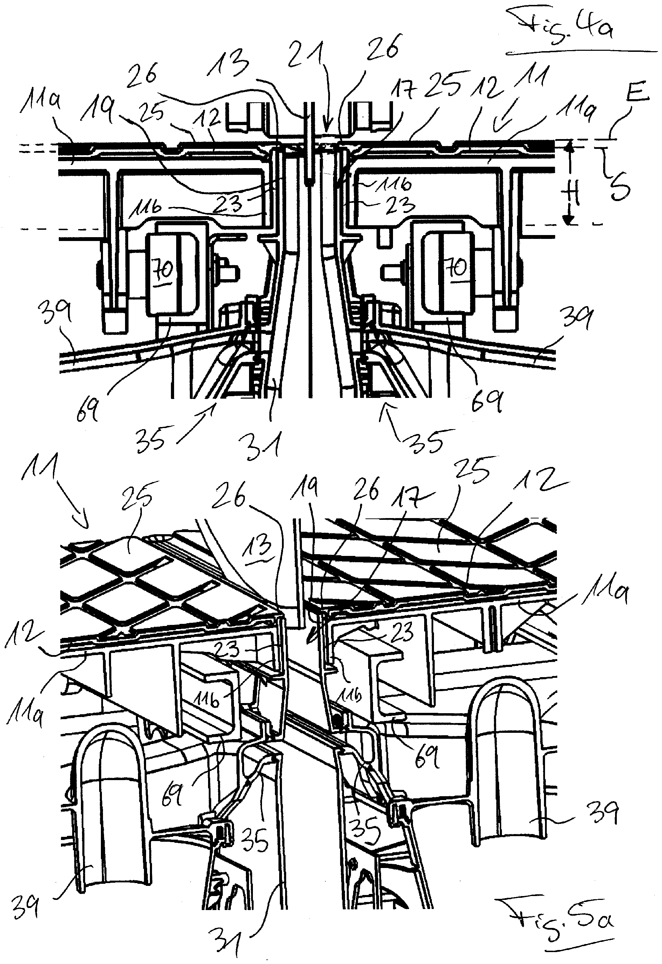

Aufgrund dieser Verbindung sind die beiden Teile des Arbeitstisches 11 gemeinsam in und entgegen der Arbeitsrichtung A bewegbar. Hierbei ist der Arbeitstisch 11 als Rolltisch ausgebildet. Fig. 2 - eine Ansicht der Steinsäge bei abgenommenem Arbeitstisch 11 - zeigt einen Unterbau für den Arbeitstisch 11, wobei dieser Unterbau im Querschnitt C-förmige Schienen 69 umfasst, in die bei angebrachtem Arbeitstisch 11 unterhalb des Arbeitstisches 11 angebrachte Rollen 70 (vgl. Fig. 4) aufgenommen sind. In Fig. 2 sind - lediglich zu Erläuterungszwecken - die Rollen 70 ebenfalls dargestellt. Wie erwähnt, sind die Rollen 70 an der Unterseite des Arbeitstisches 11 angebracht und daher bei abgenommenem Arbeitstisch 11 nicht in die Schienen 69 aufgenommen.

Der Arbeitstisch 11 kann mittels seiner Rollen 70 auf der Oberseite eines jeweiligen unteren Schienenschenkels abrollen, der hierzu mit einer Stange kreisförmigen Querschnitts versehen ist, um auf diese Weise eine seitliche Führung der entsprechend komplementär geformten Rolle 70 bereitzustellen.

Für jeden der beiden Teile des Arbeitstisches 11 ist ein Paar von Schienen 69 vorgesehen, nämlich eine äußere Schiene 69 und eine innere Schiene 69.

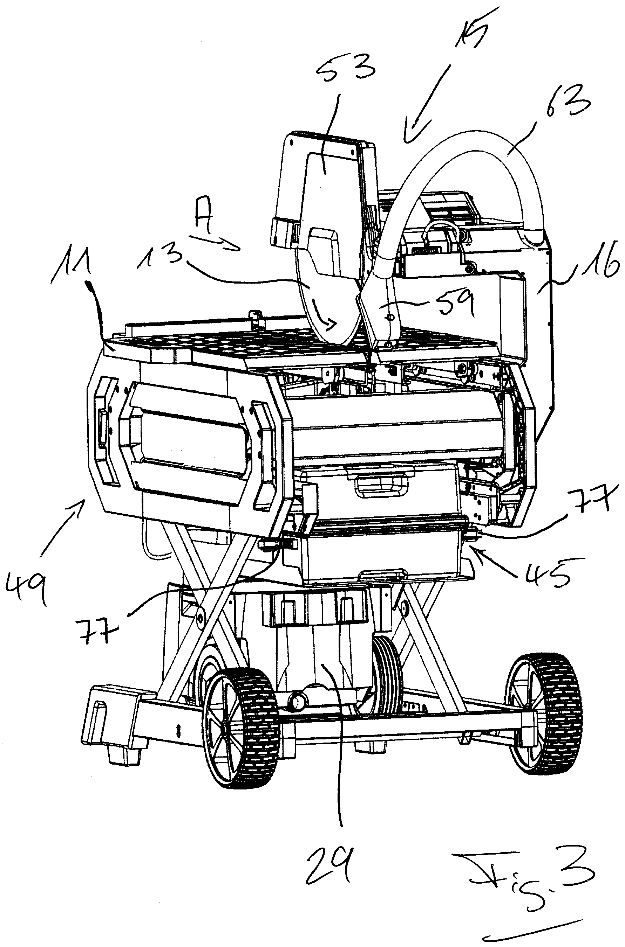

Zwischen den beiden inneren Schienen 69 ist der von einer Saugdüse 19 gebildete obere Bereich eines Saugkastens 31 angeordnet, der einen Bestandteil des Saugsystems der Absaugeinrichtung bildet und der nachstehend näher erläutert wird. In Fig. 3 ist eine oberhalb des Arbeitstisches 11 angeordnete, ebenfalls einen Bestandteil des Saugsystems bildende Zusatzsaugdüse 59 angeordnet, die in Arbeitsrichtung A hinter dem Sägeblatt 13 positioniert und an der Schutzhaube 53 angebracht ist. Über einen Saugkanal 63 in Form eines flexiblen Saugschlauches ist die Zusatzsaugdüse 59 an den Staubsauger 29 angeschlossen. Hierzu verläuft der Saugschlauch 63 unter anderem durch den vertikalen Tragarm 16 des oberen Arbeitsteils 49 der Säge hindurch.

Eine Saugöffnung 61 (vgl. z.B. Fig. 4) der Zusatzsaugdüse 59 ist derart auf das Sägeblatt 13 ausgerichtet, dass die Saugöffnung 61 in der Flugbahn von Staubund/oder Partikelmaterial liegt, das während der Bearbeitung von dem in Pfeilrichtung rotierenden Sägeblatt 13 nach hinten weggeschleudert wird.

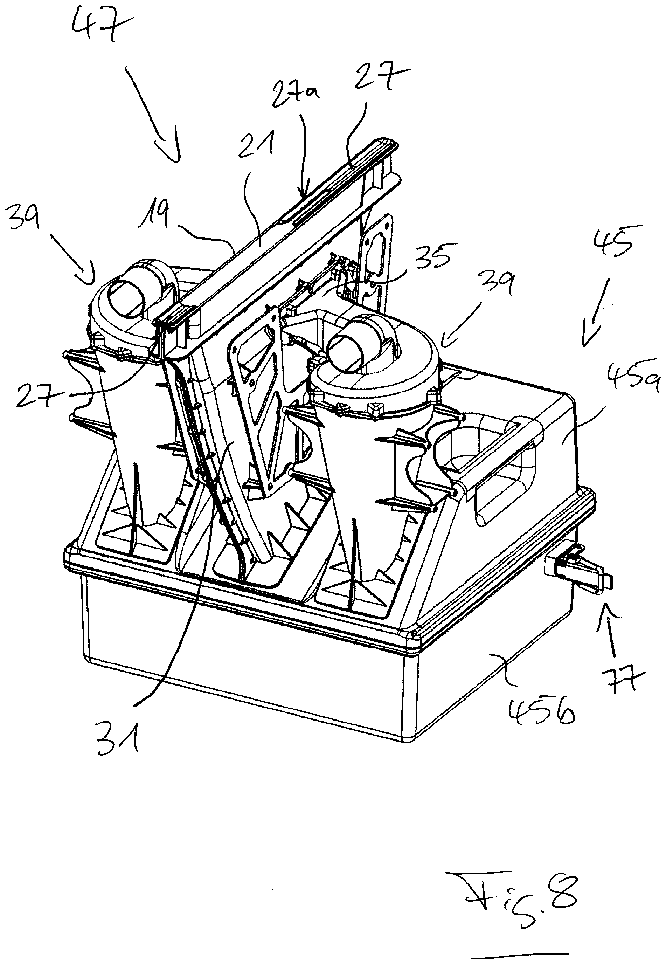

Unterhalb des Arbeitstisches 11 ist an dem Arbeitsteil 49 ein Materialsammelbehälter 45 (Fig. 3) angebracht, der unter anderem mit dem bereits erwähnten Saugkasten 31 eine separate, als Ganzes handhabbare Saug-/Sammel-Einheit 47 (vgl. Fig. 8) bildet, die an anderer Stelle näher erläutert wird.

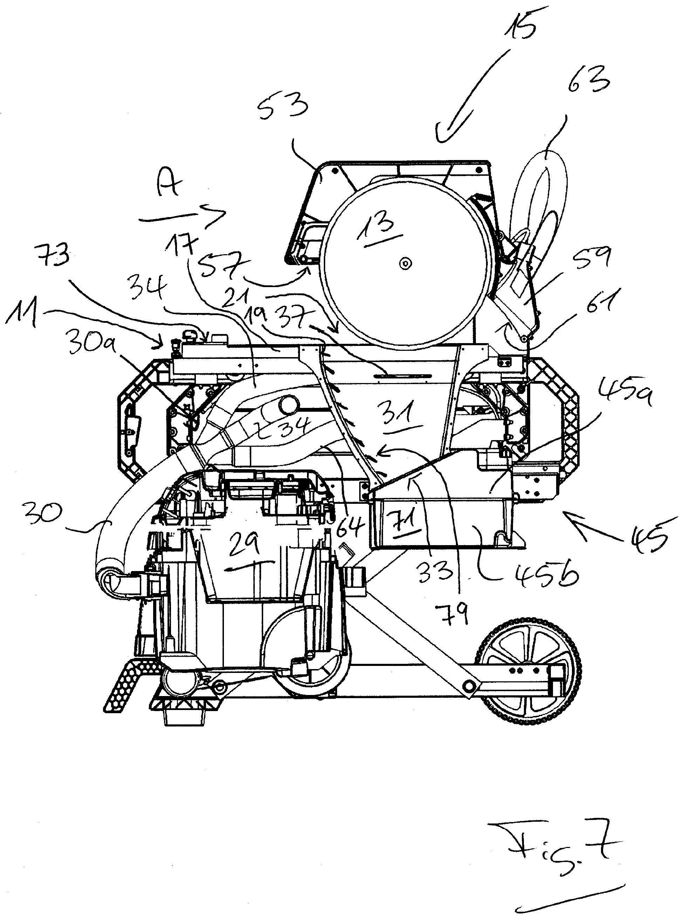

Zu dieser Saug-/Sammel-Einheit 47 gehören außerdem zwei Vorabscheider 39 (vgl. Fig. 2) in Form von so genannten Zyklonabscheidern, die zu beiden Seiten des Saugkastens 31 angeordnet sind. Die Zyklonabscheider 39 sind Materialabscheider im Sinne der vorliegenden Offenbarung und über Saugschläuche 34 mit dem Staubsauger 29 verbunden, und zwar über eine in Fig. 2 nicht dargestellte Verzweigung 30a (vgl. Fig. 7) und einen von der Verzweigung 30a zum Sauganschluss des Staubsaugers 29 führenden Saugschlauch 30.

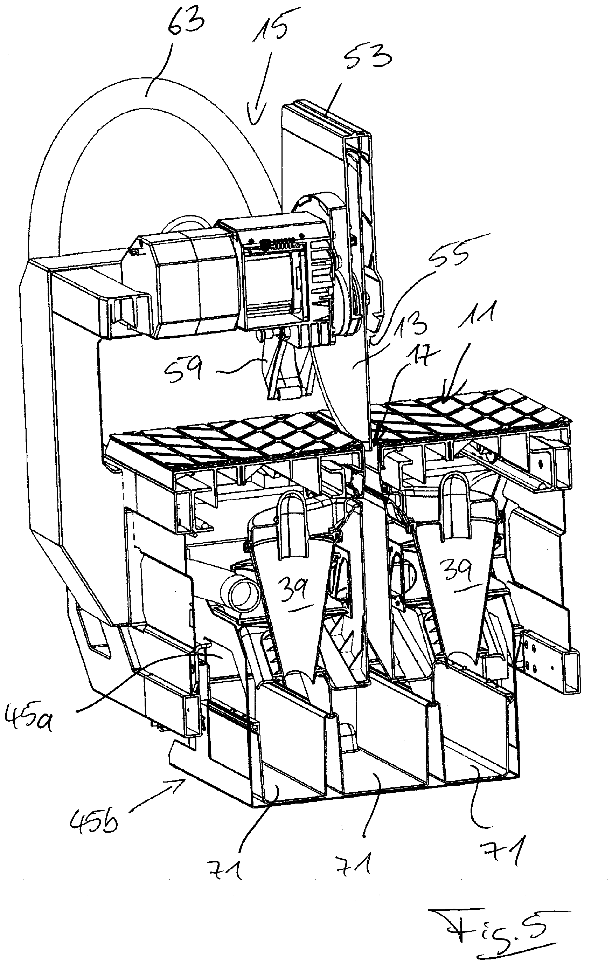

Die Fig. 4 und 5 zeigen Schnittansichten zur Erläuterung des Saugsystems, wobei Fig. 4a ein vergrößerter Ausschnitt aus Fig. 4 und Fig. 5a ein vergrößerter Ausschnitt aus Fig. 5 ist.

Diese Figuren zeigen, dass die Anordnung aus Saugkasten 31 mit Saugdüse 19 (vgl. Fig. 4a und 5a) bezüglich einer durch das Sägeblatt 13 definierten Mittelebene symmetrisch ausgebildet ist. Die beiden Zyklonabscheider 39 zweigen unterhalb des Arbeitstisches 11 seitlich von dem Saugkasten 31 ab. Hierzu sind von dem Saugkasten 31 seitlich wegführende Saugabzweigungen 35 vorgesehen. Wie die Schnittdarstellung der Fig. 7 zeigt, weist der Strömungsquerschnitt am Übergang von dem Saugkasten 31 in die Saugabzweigung 35 die Form eines sich in Arbeitsrichtung A erstreckenden Langlochs 37 auf. Der Übergang vom Saugkasten 31 in den jeweiligen Zyklonabscheider 39 bzw. in die zu diesem führende Saugabzweigung 35 ist aufgrund des Langlochs 37 also schlitzförmig.

Sowohl der Saugkasten 31 als auch die beiden Zyklonabscheider 39 besitzen jeweils an ihrem unteren Ende eine Materialauslassöffnung 33 bzw. 41. Über diese Öffnungen 33, 41 gelangt Material, das nicht bis zum Staubsauger 29 abgesaugt wird, in ein Unterteil 45b (vgl. Fig. 5) des bereits erwähnten Sammelbehälters 45. Für das vom Saugkasten 31 kommende Material ist ein separates mittleres Sammelfach 71 vorgesehen, wobei seitlich neben diesem mittleren Sammelfach 71 jeweils ein separates Sammelfach 71 für den jeweiligen Zyklonabscheider 39 vorgesehen ist.

Die aus mehreren zusammengesetzten, beispielsweise miteinander verschraubten oder verschweißten Einzelteilen bestehende Einheit aus Saugkasten 31 und Zyklonabscheider 39 ist an einem Oberteil 45a des Sammelbehälters 45 angebracht. Das Oberteil 45a bildet einen Deckel des Sammelbehälters 45, von dem das die Sammelfächer 71 beinhaltende Unterteil 45b abgenommen werden kann. Deckel 45a und Unterteil 45b sind hierzu lösbar miteinander verbunden, und zwar durch Spanneinrichtungen 77, von denen eine in Fig. 8 dargestellt ist (vgl. auch Fig. 3).

Wie insbesondere den Fig. 4a und 5a zu entnehmen ist, ragt die den oberen Bereich des Saugkastens 31 bildende Saugdüse 19 von unten in den Arbeitsschlitz 17 des Arbeitstisches 11 hinein. Dabei ragt die Saugdüse 19 derart weit in den Arbeitsschlitz 17 hinein, dass die Saugöffnung 21 der Saugdüse 19 geringfügig unterhalb einer von dem Arbeitstisch 11 definierten Auflageebene E des Arbeitstisches 11 liegt. Der obere Rand der Saugdüse 19, der die Saugöffnung 21 definiert, liegt in einer Ebene S (vgl. Fig. 4a), die geringfügig von der erwähnten Auflageebene E beabstandet ist. Der Abstand zwischen den beiden Ebenen E und S ist wesentlich kleiner als die Höhe H des Arbeitsschlitzes 17 im Bereich der Saugdüse 19. Die Höhe H wird hier von der Auflageebene E bis zum unteren Ende zweier in Arbeitsrichtung A verlaufender Streben 11b gemessen wird, die von der Unterseite einer Platte 11a des Arbeitstisches 11 abstehen und den Arbeitsschlitz 17 begrenzen.

Auf der Platte 11a des Arbeitstisches 11 liegt ein im Wesentlichen plattenförmiger Träger 12 aus Metall, der an seiner Oberseite mit einer Tischauflage 25 aus Gummi versehen ist. Auf dieser Gummiauflage 25 liegen während der Bearbeitung die zu bearbeitenden Werkstücke, beispielsweise Steinplatten oder Fliesen. Die Oberseite der Gummiauflage 25 definiert die erwähnte Auflageebene E und stellt die Auflagefläche des Arbeitstisches 11 bereit.

Die Saugdüse 19 ist etwas schmaler als der durch die erwähnten Streben 11b begrenzte Arbeitsschlitz 17 des Arbeitstisches 11, sodass jeweils zwischen einer der Streben 11b und der entsprechenden seitlichen Begrenzung der Saugdüse 19 ein Spalt 23 vorhanden ist. Um zu verhindern, dass während der Bearbeitung entstehendes Staub- und/oder Partikelmaterial durch diese Spalte 23 hindurch unter den Arbeitstisch 11 gelangt, ist die Gummiauflage 25 mit überstehenden Lippen 26 versehen, die den jeweiligen Spalt 23 abdecken. Die Dicke der Tischauflage 25 und damit der Abdecklippen 26 entspricht etwa dem Abstand zwischen den beiden Ebenen E und S, d.h. die Abdecklippen 26 liegen am die Saugöffnung 21 begrenzenden oberen Rand der Saugdüse 19 an, womit eine optimale Abdichtung im Bereich der Spalte 23 sichergestellt ist.

Ausgehend von der Saugdüse 19 in Strömungsrichtung vor den beiden seitlichen Saugabzweigungen 35 in die Zyklonabscheider 39 verbreitert sich der Saugkasten 31, wobei der Saugkasten 31 von unterhalb des Arbeitsschlitzes 17 bis unterhalb der Saugabzweigungen 35 im Querschnitt konisch geformt ist.

Während der Bearbeitung befindet sich die Arbeitseinheit 15 (vgl. z.B. Fig. 1, 2 und 3) in Abhängigkeit von dem Durchmesser des Sägeblatts 13 derart weit oberhalb des Arbeitstisches 11, dass das Sägeblatt 13 durch die Saugöffnung 21 der Saugdüse 19 hindurch in die Saugdüse 19 hinein vorsteht. Das Sägeblatt 13 ist folglich während der Bearbeitung derart angeordnet, dass es von oben in den Arbeitsschlitz 17 und damit gleichzeitig in die Saugdüse 19 eintaucht.

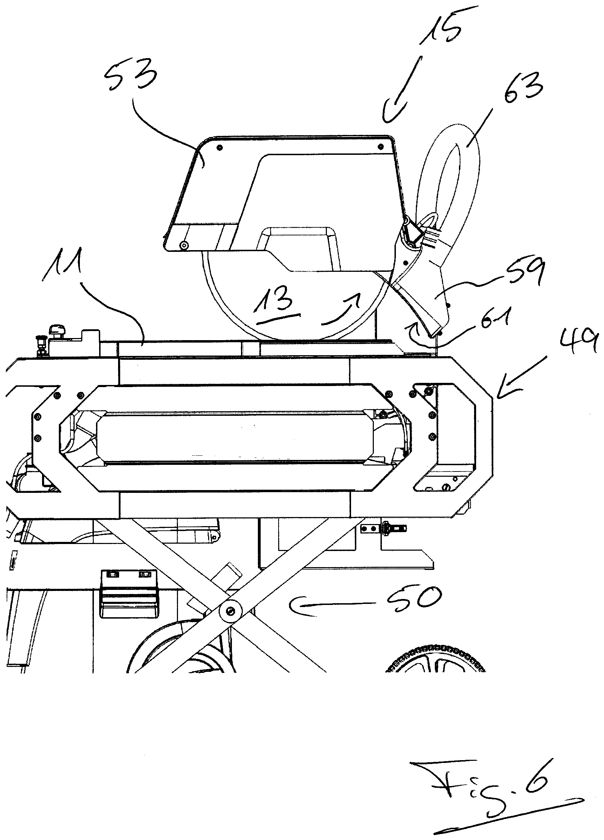

Fig. 6 zeigt eine Seitenansicht der Steinsäge, während Fig. 7 eine geschnittene Seitenansicht zeigt, wobei die vertikale Schnittebene durch das Sägeblatt 13 hindurch verläuft.

Fig. 7 zeigt, dass der Saugkasten 31 eine Schwert- oder Finnenform aufweist, wobei der Saugkasten 31 hinten durch eine gerade, geringfügig zur Vertikalen geneigte schmale Rückwand und vorne durch eine gekrümmte schmale Vorderwand begrenzt ist. Das obere Ende des Saugkastens 31 wird von der Saugdüse 19 gebildet. Die Saugöffnung 21 der Saugdüse 19 besitzt in Arbeitsrichtung A eine Länge, die etwas kleiner ist als der Durchmesser des Sägeblatts 13.

Wie im Einleitungsteil als mögliche Ausgestaltung erläutert, ist hier der Saugkasten 31 derart geformt, dass das während der Bearbeitung entstehende, als Strahl von dem Bereich des Einwirkens des Sägeblatts 13 auf das Werkstück ausgehende Staub- und/oder Partikelmaterial direkt, d.h. ohne Aufprallen auf eine Wand des Saugkastens 31, durch die Materialauslassöffnung 33 des Saugkastens 31 hindurch und so direkt in das betreffende Sammelfach 71 des Materialsammelbehälters 45 gelangt.

Um ein Wiederaufsteigen von Material, insbesondere von Staub, aus dem Behälter 45 nach oben in Richtung der Saugöffnung 21 zu unterdrücken, ist der Saugkasten 31 an seiner Innenseite - hier beispielhaft an seiner gekrümmten Vorderwand - mit plättchenförmigen, nach unten geneigten Rückhalte-Vorsprüngen 79 versehen. Derartige Rückhalteelemente 79 können alternativ oder zusätzlich auch an einer oder mehreren anderen Innenwänden des Saugkastens 31 vorgesehen werden.

Wie an anderer Stelle erwähnt, sind die Arbeitseinheit 15 und damit das Sägeblatt 13 sowie das Saugsystem und damit insbesondere auch der Saugkasten 31 samt Saugdüse 19 und Saugöffnung 21 feststehend angeordnet. Während der Bearbeitung bewegt sich in Arbeitsrichtung A lediglich der Arbeitstisch 11 mit einem jeweiligen aufliegenden Werkstück. Im Bezugssystem des sich bewegenden Arbeitstisches 11 betrachtet, bewegen sich somit die Saugdüse 19 und das in die Saugdüse 19 eintauchende Sägeblatt 13 entlang des Arbeitsschlitzes 17 des Arbeitstisches 11.

Fig. 7 zeigt des Weiteren die Auslassöffnung 33 des Saugkastens 31, die oberhalb des mittleren Sammelfachs 71 liegt und in den Deckel 45a des Sammelbehälters 45 mündet.

Ferner zeigt Fig. 7 die beiden Saugschläuche 34, die von den hier nicht dargestellten Zyklonabscheidern 39 zu der Verzweigung 30a des Saugsystems führen, von der das abgesaugte Material über den Saugschlauch 30 zum Staubsauger 29 gelangt.

Zu dieser Verzweigung 30a führt außerdem ein weiterer Saugschlauch 64, der strömungstechnisch mit dem von der Zusatzsaugdüse 59 ausgehenden Saugschlauch 63 verbunden ist. Der Saugschlauch 63 und der Saugschlauch 64 sind Abschnitte eines von der Zusatzsaugdüse 59 zur Verzweigung 30a führenden Saugschlauches, der durch den vertikalen Tragarm 16 und die Basis 18 des Arbeitsteils 49 (vgl. auch Fig. 1) geführt ist.

Der in Arbeitsrichtung A gesehen linke Zyklonabscheider 39 ist in Fig. 7 durch den Saugkasten 31 verdeckt. Dargestellt in Fig. 7 ist das Langloch 37, das die schlitzförmige Strömungsverbindung vom Saugkasten 31 in die zum linken Zyklonabscheider 39 führende Saugabzweigung 35 bildet.

Fig. 8 zeigt die bereits erwähnte Saug-/Sammel-Einheit 47, die als Ganzes an dem Arbeitsteil 49 unterhalb des Arbeitstisches 11 angebracht und als Ganzes abgenommen werden kann.

Die Saug-/Sammel-Einheit 47 umfasst den Sammelbehälter 45 mit Deckel 45a und Unterteil 45b sowie einen Teil des Saugsystems, nämlich den Saugkasten 31 mit den über die seitlichen Saugabzweigungen 35 daran angebrachten Zyklonabscheidern 39.

Fig. 8 zeigt außerdem, dass die Saugöffnung 21 der Saugdüse 19 sowohl an ihrem vorderen Ende als auch an ihrem hinteren Ende lokal abgedeckt ist, und zwar jeweils durch ein separates Abdeckelement 27, das an der Saugdüse 19 angebracht ist.

Das in Arbeitsrichtung A hinter dem Sägeblatt 13 (vgl. beispielsweise Fig. 1) gelegene Abdeckelement 27 ist an seinem näher am Sägeblatt 13 gelegenen Endbereich gabelförmig ausgebildet. In dem von den beiden Gabelzinken dieses gabelförmigen Abschnitts 27a definierten Schlitz bewegt sich während des Betriebs das Sägeblatt 13 (vgl. z. B. Fig. 1, 5 und 10).

Die Saugöffnung 21 ist hierdurch wirksam abgedichtet. Der freie, nicht abgedeckte Bereich der Saugöffnung 21 kann durch Auswechseln der Abdeckelemente 27 an Sägeblätter 13 mit unterschiedlich großen Durchmessern angepasst werden.

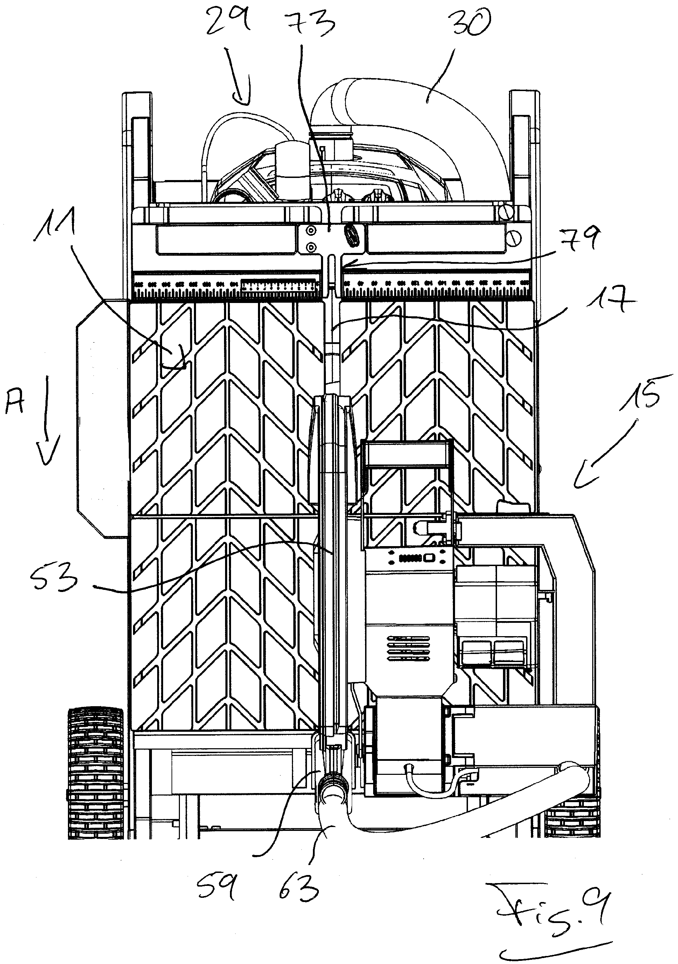

Die Draufsicht auf die Steinsäge von oben gemäß Fig. 9 zeigt insbesondere das separate Koppelelement 73, das die beiden Teile des Arbeitstisches 11 miteinander verbindet. Das Koppelelement 73 weist einen Fortsatz 79 auf, der den Arbeitsschlitz 17 lokal abdeckt. Der Fortsatz 75 ist gabelförmig ausgebildet, sodass beim Bewegen des Arbeitstisches 11 in Arbeitsrichtung A bei Erreichen einer entsprechenden Endstellung des Arbeitstisches 11 das Sägeblatt 13 in den von den beiden Gabelzinken begrenzten Schlitz gelangt. Ein Bereich des Arbeitsschlitzes 17 und damit auch der bei dieser Stellung des Arbeitstisches 11 dort befindlichen Saugöffnung 21 der Saugdüse 19 ist somit durch das Koppelelement 73 und dessen gabelförmigen Fortsatz 75 abgedeckt.

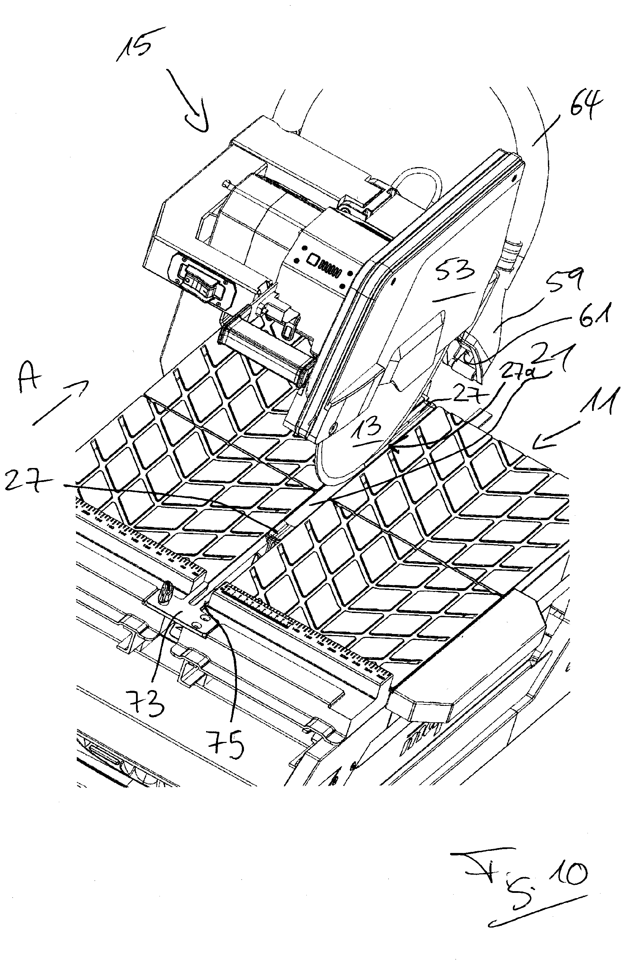

Die perspektivische Draufsicht der Fig. 10 zeigt ebenfalls das erwähnte Koppelelement 73 mit dem gabelförmigen Fortsatz 75 sowie die beiden an der Saugdüse 19 angebrachten, die Saugöffnung 21 der Saugdüse 19 entsprechend verkleinernden Abdeckelemente 27.

Außerdem ist in Fig. 10 die an der Schutzhaube 53 angebrachte rückwärtige Zusatzsaugdüse 59 mit der auf den rückwärtigen Bereich des Sägeblatts 13 gerichteten Saugöffnung 61 dargestellt.

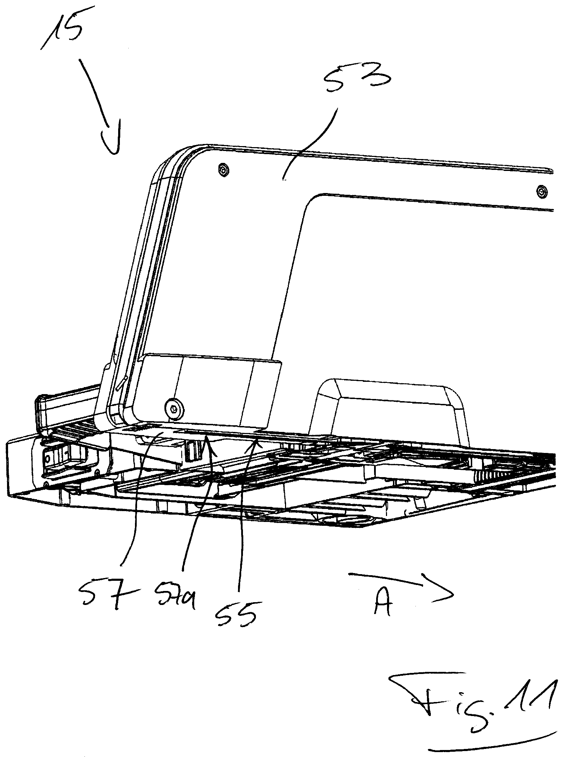

Fig. 11 zeigt eine Ansicht schräg von unten auf die Schutzhaube 53 ohne das Sägeblatt 13. Die Schutzhaube 53 ist an ihrer Unterseite mit einer Austrittsöffnung 55 für das Sägeblatt 13 versehen.

Ein in Arbeitsrichtung A vor dem Sägeblatt 13 liegender freier Bereich der Austrittsöffnung 55 ist durch ein separates Abdeckelement 57 verschlossen, das einen gabelförmigen Abschnitt 57a aufweist, dessen seitliche Gabelzinken einen Schlitz begrenzen, in welchem sich während des Betriebs das Sägeblatt 13 bewegt. Diese Abdeckung 57, 57a verhindert, dass ein von dem während des Betriebs rotierenden Sägeblatt 13 erzeugter Luftstrom nach unten aus der Haube 53 austritt. Ein solcher Luftstrom könnte während des Betriebs zu störenden Staubaufwirbelungen führen.

Das Abdeckelement 57 kann auswechselbar sein, um die Austrittsöffnung 55 an Sägeblätter 13 mit unterschiedlichen Durchmessern anzupassen.

### Bezugszeichenliste

- 11: Arbeitstisch
- 11a: Platte
- 11b: Strebe
- 12: Träger
- 13: Bearbeitungswerkzeug, Sägeblatt
- 14: Antriebsmotor
- 15: Arbeitseinheit
- 16: Tragarm
- 17: Arbeitsschlitz
- 18: Basis
- 19: Saugdüse
- 21: Saugöffnung
- 23: Spalt
- 25: Tischauflage
- 26: Abdeckung, Lippe
- 27: Abdeckelement
- 27a: gabelförmiger Abschnitt
- 29: Unterdruckerzeugungseinrichtung, Staubsauger
- 30: Saugkanal, Saugschlauch
- 30a: Verzweigung
- 31: Saugkasten
- 33: Materialauslassöffnung
- 34: Saugkanal, Saugschlauch
- 35: Saugabzweigung
- 37: Langloch
- 39: Materialabscheider, Zyklonabscheider
- 41: Materialauslassöffnung
- 43: Saugabzweigung
- 45: Materialsammelbehälter
- 45a: Deckel
- 45b: Unterteil
- 47: Saug-/Sammel-Einheit
- 49: Arbeitsteil
- 50: Scherengestänge
- 51: Gestellteil
- 53: Haube
- 55: Austrittsöffnung
- 57: Abdeckung
- 57a: gabelförmiger Abschnitt
- 59: Zusatzsaugdüse
- 61: Saugöffnung
- 63: Saugkanal, Saugschlauch
- 64: Saugkanal, Saugschlauch
- 65: Rad
- 67: Griff
- 69: Schiene
- 70: Rolle
- 71: Sammelfach
- 73: Koppelelement
- 75: Fortsatz
- 77: Spanneinrichtung
- 79: Rückhalteelement

- A: Arbeitsrichtung
- E: Auflageebene
- H: Höhe des Arbeitsschlitzes

## Patentansprüche

1. Elektrische Bearbeitungsvorrichtung, insbesondere Säge- oder Trennvorrichtung, insbesondere Trockensteinsäge, zum Bearbeiten von Werkstücken, insbesondere zum Sägen oder Trennen von Werkstücken aus Steinmaterial, mit
- einem während der Bearbeitung eine Auflage für ein jeweiliges Werkstück bereitstellenden Arbeitstisch (11),
- einer ein Bearbeitungswerkzeug (13), insbesondere ein Sägeblatt oder eine Trennscheibe, umfassenden Arbeitseinheit (15), und
- einer Absaugeinrichtung für während der Bearbeitung entstehendes Staub- und/oder Partikelmaterial,
wobei der Arbeitstisch (11) einen sich in einer Arbeitsrichtung (A) erstreckenden Arbeitsschlitz (17) aufweist, in den das Bearbeitungswerkzeug (13) während der Bearbeitung von oben eintaucht,
wobei die Absaugeinrichtung eine Saugdüse (19) umfasst, die von unten in den Arbeitsschlitz (17) hineinragt und eine in Arbeitsrichtung (A) langgestreckte, nach oben weisende Saugöffnung (21) aufweist, und
wobei die Saugdüse (19) derart weit in den Arbeitsschlitz (17) hineinragt, dass während der Bearbeitung das in den Arbeitsschlitz (17) eingetauchte Bearbeitungswerkzeug (13) durch die Saugöffnung (21) hindurch in die Saugdüse (19) hinein vorsteht.

2. Vorrichtung nach Anspruch 1,
wobei die Saugdüse (19) derart weit in den Arbeitsschlitz (17) hineinragt, dass die Saugöffnung (21) im Bereich einer durch den Arbeitstisch (11) definierten Auflageebene (E) liegt, insbesondere wobei der Abstand der Saugöffnung (21) von der Auflageebene (E) 1/10 bis 1/50 der im Bereich der Saugdüse (19) gemessenen Höhe des Arbeitsschlitzes (17) beträgt.

3. Vorrichtung nach Anspruch 1 oder 2,
wobei das Bearbeitungswerkzeug (13) und die Saugdüse (19) während der Bearbeitung relativ zueinander feststehend angeordnet sind, und/oder wobei das Bearbeitungswerkzeug (13) und die Saugdüse (19) in Arbeitsrichtung (A) feststehend angeordnet sind.

4. Vorrichtung nach einem der vorhergehenden Ansprüche,
wobei der Arbeitsschlitz (17) frei von außerhalb der Saugdüse (19) gelegenen, der Saugöffnung (21) vorgelagerten Einsätzen ist.

5. Vorrichtung nach einem der vorhergehenden Ansprüche,
wobei in Arbeitsrichtung (A) vor und/oder hinter dem Bearbeitungswerkzeug (13) ein die Saugöffnung (21) der Saugdüse (19) lokal abdeckendes, insbesondere abnehmbares, Abdeckelement (27) vorgesehen ist, insbesondere wobei das Abdeckelement (27) an der Saugdüse (19) angebracht ist.

6. Vorrichtung nach einem der vorhergehenden Ansprüche,
wobei die Saugdüse (19) ein Bestandteil eines Saugsystems der Absaugeinrichtung ist, an das eine Unterdruckerzeugungseinrichtung (29) angeschlossen oder anschließbar ist, insbesondere wobei die Unterdruckerzeugungseinrichtung (29) von einem separaten, entnehmbaren Staubsauger gebildet ist, der in die Bearbeitungsvorrichtung integriert oder für den zumindest in einer Betriebskonfiguration der Bearbeitungsvorrichtung an dieser ein Aufnahmeplatz vorgesehen ist.

7. Vorrichtung nach einem der vorhergehenden Ansprüche,
wobei die Absaugeinrichtung einen, insbesondere senkrecht zur Auflage des Arbeitstisches (11) und parallel zur Arbeitsrichtung (A) verlaufenden, Saugkasten (31) umfasst, dessen oberes Ende von der Saugdüse (19) gebildet ist und der eine unterhalb des Arbeitstisches (11) gelegene Materialauslassöffnung (33) aufweist, wobei das Saugsystem in Strömungsrichtung zwischen der Saugöffnung (21) der Saugdüse (19) und der Materialauslassöffnung (33) des Saugkastens (31) wenigstens eine von dem Saugkasten (31) seitlich wegführende Saugabzweigung (35) aufweist.

8. Vorrichtung nach Anspruch 7,
wobei der Strömungsquerschnitt am Übergang von dem Saugkasten (31) in die Saugabzweigung (35) die Form eines sich in Arbeitsrichtung (A) erstreckenden Langlochs (37) aufweist.

9. Vorrichtung nach Anspruch 7 oder 8,
wobei die Saugabzweigung (35) in einen unterhalb des Arbeitstisches (11) angeordneten Materialabscheider (39) des Saugsystems übergeht, insbesondere einen Zyklonabscheider, der eine unterhalb des Arbeitstisches (11) gelegene Materialauslassöffnung (41) und stromaufwärts dieser Materialauslassöffnung (41) eine zur Unterdruckerzeugungseinrichtung (29) führende Saugabzweigung (43) aufweist.

10. Vorrichtung nach einem der Ansprüche 7 bis 9,
wobei der Saugkasten (31), der Materialabscheider (39) und ein Materialsammelbehälter (45) zu einer als Ganzes handhabbaren Saug-/SammelEinheit (47) des Saugsystems gehören, insbesondere wobei der Saugkasten (31) und der Materialabscheider (39) an einem Deckel (45a) des Materialsammelbehälters (45) angebracht sind, der von einem Unterteil (45b) des Materialsammelbehälters (45) abnehmbar oder relativ zu dem Unterteil (45b) bewegbar.

11. Vorrichtung nach Anspruch 10,
wobei die Saug-/Sammel-Einheit (47) in einer bezogen auf die Arbeitsrichtung (A) hinteren Hälfte der Bearbeitungsvorrichtung unterhalb des Arbeitstisches (11) angeordnet ist und sich die, insbesondere als separater, entnehmbarer Staubsauger ausgebildete, Unterdruckerzeugungseinrichtung (29) in einer bezogen auf die Arbeitsrichtung (A) vorderen Hälfte der Bearbeitungsvorrichtung unterhalb des Arbeitstisches (11) befindet.

12. Vorrichtung nach Anspruch 10 oder 11,
wobei die Saug-/Sammel-Einheit (47) an einem oberen Arbeitsteil (49) der Bearbeitungsvorrichtung angebracht und die Unterdruckerzeugungseinrichtung (29) an einem unteren Gestellteil (51) der Bearbeitungsvorrichtung angeordnet ist, insbesondere wobei das obere Arbeitsteil (49) bei von dem unteren Gestellteil (51) entnommener Unterdruckerzeugungseinrichtung (29) in vertikaler Richtung relativ zu dem unteren Gestellteil (51) zwischen einer oberen Betriebskonfiguration und einer unteren Transportkonfiguration verstellbar ist.

13. Vorrichtung nach einem der vorhergehenden Ansprüche,
wobei das Saugsystem eine Haube (53) für das Bearbeitungswerkzeug (13) umfasst, die eine Austrittsöffnung (55) für das Bearbeitungswerkzeug (13) aufweist, wobei ein an das Bearbeitungswerkzeug (13) angrenzender freier Bereich der Austrittsöffnung (55) zumindest teilweise durch eine oder mehrere Abdeckungen (57) verschlossen ist.

14. Vorrichtung nach einem der vorhergehenden Ansprüche,
wobei das Saugsystem eine, insbesondere an einer Haube (53) für das Bearbeitungswerkzeug (13) angebrachte, Zusatzsaugdüse (59) umfasst, deren Saugöffnung (61) in der Flugbahn von während der Bearbeitung vom Bearbeitungswerkzeug (13) weggeschleudertem Material liegt, insbesondere wobei die Zusatzsaugdüse (59) an einen zur Unterdruckerzeugungseinrichtung (29) führenden Saugkanal (63) angeschlossen oder anschließbar ist.

15. Vorrichtung nach einem der vorhergehenden Ansprüche,
wobei der Arbeitstisch (11) in Arbeitsrichtung (A) beweglich ist, insbesondere wobei der Arbeitsschlitz (17) durchgehend ist und den Arbeitstisch (11) in zwei Teile teilt, die zur gemeinsamen Bewegung miteinander, insbesondere lösbar, gekoppelt, insbesondere wobei zur Koppelung der beiden Teile des Arbeitstisches (11) ein Koppelelement (73) vorgesehen ist, das im Bereich des einen Endes des Arbeitstisches (11) angeordnet ist, wobei vorzugsweise das Koppelelement (73) einen, bevorzugt gabelförmigen, Fortsatz (75) aufweist, der den Arbeitsschlitz (17) lokal abdeckt,
oder wobei der Arbeitstisch in Arbeitsrichtung feststehend angeordnet ist, insbesondere wobei der Arbeitsschlitz geschlossen ist und vorzugsweise sich lediglich im Bereich der Saugdüse erstreckt.
